# FASCICULE DE BREVET EUROPEEN

(11) **EP 0 865 957 B1**
(45) Date de publication et mention de la délivrance du brevet: **02.05.2003**
(21) Numéro de dépôt: 98400625.4
(22) Date de dépôt: 17.03.1998
(51) Int. Cl.: B60K 37/06, H01H 19/06, B60H 1/00

(54) **Bouton rotatif exempt de fuites de lumière pour tableau de commande de chauffage de véhicule**
Lichtaustritt verhindernder Drehknopf für eine Heizungssteuertafel eines Fahrzeuges
Light leakage preventing rotary knob for heating control panel of vehicle

(30) Priorité: 18.03.1997 FR 9703271
(43) Date de publication de la demande: 23.09.1998
(73) Titulaire: AFE Plasturgie, 95580 Andilly (FR)
(72) Inventeur: Michel, François, 72200 La Fleche (FR)
(74) Mandataire: Rousset, Jean-Claude

(56) Documents cités:
- EP-A- 0 614 779
- EP-A- 0 669 217
- DE-A- 4 328 659

## Description

L'invention concerne un bouton de manoeuvre propre à tourner autour d'un axe, notamment pour un tableau de commande de chauffage de l'habitacle d'un véhicule, comprenant un corps rigide et un capuchon qui recouvre le corps radialement et d'un premier côté dans la direction axiale, et se termine par un bord annulaire du second côté dans la direction axiale. Un tel bouton de manoeuvre est divulgué dans le document EP-A-0614779.

Dans un tel bouton équipant le tableau de commande de chauffage d'un véhicule, le capuchon dissimule à peu près entièrement le corps aux yeux de l'utilisateur, et présente une forme et un décor correspondant aux souhaits du constructeur automobile, tandis que le corps peut être commun à différents véhicules.

Généralement, le bouton porte un repère ou index qui vient en regard de différents symboles figurant sur la façade du tableau de commande, en fonction de la position angulaire du bouton, ce repère étant éclairé la nuit par de la lumière provenant d'une source disposée à l'intérieur du tableau de commande et traversant le bouton. Le problème se pose alors d'éviter que de la lumière passe entre la façade et le bouton et forme autour de celui-ci un halo gênant pour le conducteur du véhicule.

Il est également souhaitable qu'un couple résistant déterminé soit opposé à la manoeuvre en rotation du bouton par l'utilisateur.

Tels sont les objectifs visés par la présente invention.

L'invention vise notamment un bouton de manoeuvre du genre défini en introduction, et prévoit que le capuchon est en élastomère et que le bord annulaire définit une lèvre annulaire propre à s'appliquer selon une ligne ou une surface de contact annulaire continue, avec déformation élastique, sur une surface d'appui fixe.

Lorsque la lèvre est appliquée sur une surface d'appui appartenant à la face avant de la façade d'un tableau de commande, aucun interstice permettant une fuite de lumière ne subsiste entre la lèvre et la façade. De plus, la force élastique exercée par la lèvre sur la façade développe le couple de freinage recherché.

On désigne ici par "face avant" la face de la façade tournée vers l'utilisateur du tableau de commande, et les termes "avant" et "arrière" se réfèrent à cette convention. Il est à noter que, dans le cas d'un tableau de commande de chauffage de véhicule, la face avant est généralement tournée vers l'arrière du véhicule.

Des caractéristiques optionnelles de l'invention, complémentaires ou alternatives, sont énoncées ci-après:
- Ladite lèvre a une forme sensiblement de révolution autour dudit axe.
- Ladite surface d'appui est sensiblement plane et perpendiculaire à l'axe, la surface d'appui et la lèvre étant tournées respectivement du premier côté et du second côté.
- La lèvre est inclinée par rapport à l'axe de telle sorte qu'elle tend à fléchir radialement vers l'extérieur ou vers l'intérieur sous la poussée exercée par ladite surface plane.
- La surface d'appui est sensiblement de révolution autour dudit axe.
- La lèvre présente, pour définir ladite ligne ou surface de contact annulaire, une portion de surface qui, en section axiale, est convexe et située dans une région médiane de la longueur de la section axiale de la lèvre.

L'invention a également pour objet un tableau de commande, notamment pour le chauffage de l'habitacle d'un véhicule, comprenant une façade et au moins un bouton de manoeuvre tel que défini ci-dessus, monté en regard de la façade, ladite lèvre annulaire étant appliquée sur la façade selon une ligne ou une surface de contact annulaire continue, avec déformation élastique.

Le tableau de commande selon l'invention peut comporter au moins certaines des particularités suivantes:
- La longueur de la lèvre, orientée dans la direction axiale, est réduite d'environ 0,3 mm par ladite déformation élastique.
- La lèvre s'appuie sur la paroi d'un évidement ménagé dans la face avant de la façade.

Les caractéristiques et avantages de l'invention seront exposés plus en détail dans la description ci-après, en se référant aux dessins annexés, où des éléments identiques ou analogues sont désignés dans toutes les figures par les mêmes numéros de référence. Sur ces dessins:
- la figure 1 est une vue en coupe axiale d'un bouton de manoeuvre selon l'invention;
- la figure 1A représente le détail A de la figure 1, à plus grande échelle;
- la figure 2 est une vue partielle en coupe de la façade d'un tableau de commande destiné à recevoir le bouton de la figure 1;
- la figure 3 est une vue analogue à la figure 1, montrant le bouton monté sur la façade;
- la figure 3A représente le détail A de la figure 3, à plus grande échelle; et
- la figure 4 est une vue de détail en coupe d'un bouton et d'une façade modifiés.

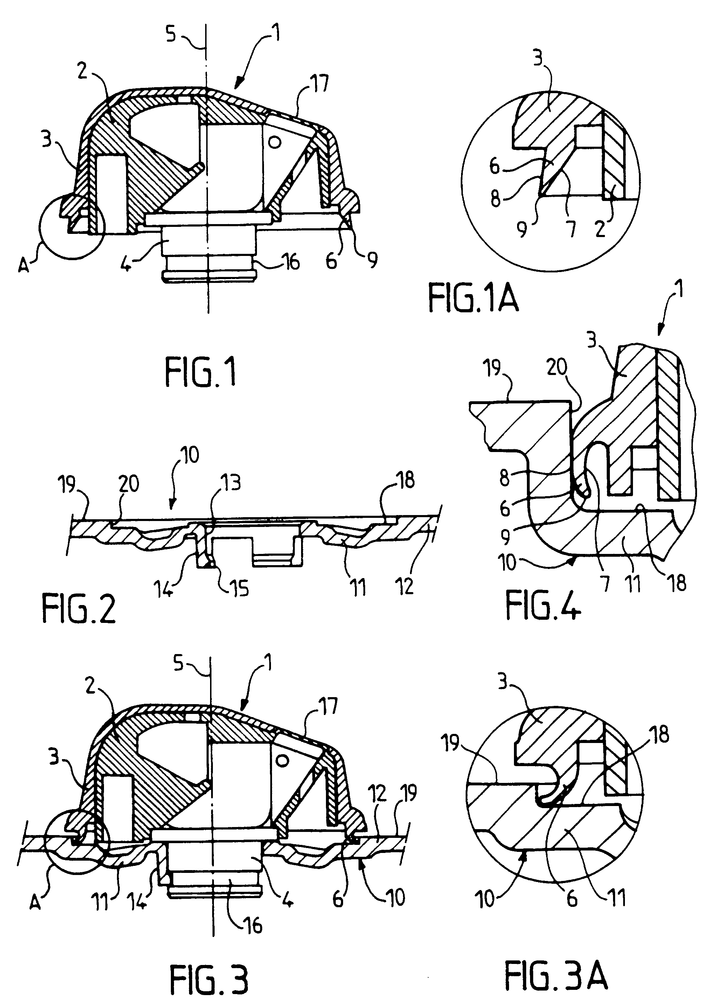

Le bouton de manoeuvre 1 représenté à la figure 1 comprend un corps 2 moulé en deux matières de couleurs différentes, et un capuchon 3 en élastomère recouvrant partiellement le corps. Le corps 2 définit un arbre en saillie 4 pour le guidage en rotation du bouton autour d'un axe 5 et pour son couplage avec un mécanisme à entraîner disposé à l'intérieur du tableau de commande. Le capuchon 3 recouvre le corps dans toutes les directions radiales, et également dans la direction axiale, du côté opposé à l'arbre 4, c'est-à-dire vers le haut de la figure 1, correspondant à l'avant du tableau de commande auquel le bouton est destiné.

Selon l'invention, le capuchon 3 se termine vers le bas de la figure 1 par une lèvre annulaire 6 limitée radialement par des faces coniques intérieure et extérieure 7, 8 qui se rejoignent sensiblement en une arête circulaire inférieure 9. Les surfaces coniques 7 et 8 ont toutes deux leur sommet tourné vers le haut, de sorte que la lèvre 9 est inclinée radialement vers l'extérieur.

La façade 10 partiellement représentée à la figure 2 comprend une portion de paroi 11 en forme de cuvette légèrement décalée vers l'arrière par rapport à une portion de paroi plane 12 entourant la portion 11. La portion de paroi 11 présente une ouverture centrale 13 destinée à recevoir l'arbre 4 du bouton 1, autour de laquelle elle se raccorde à un manchon de guidage 14 pour ce même arbre, s'étendant vers l'arrière. Le manchon 14 présente des nervures 15 tournées vers l'intérieur qui, à l'état assemblé comme montré sur la figure 3, pénètrent dans une gorge annulaire 16 de l'arbre 4 pour immobiliser axialement le bouton par rapport à la façade. Dans cet état, la partie du bouton située en avant de la façade, c'est-à-dire à l'exclusion de l'arbre 4 qui traverse celle-ci, vient en regard de la portion de paroi 11, laquelle est transparente pour permettre à la lumière de traverser le corps, quelle que soit la position angulaire de celui-ci, pour atteindre un repère 17 formé à l'avant du bouton. La portion de paroi 11 présente, à sa périphérie, une surface annulaire 18 tournée vers l'avant, située dans un plan perpendiculaire à l'axe 5, c'est-à-dire parallèle à la face avant 19 de la portion de paroi 12, à laquelle elle se raccorde directement par un échelon 20. La lèvre 6 s'appuie sur la surface 18 en fléchissant élastiquement radialement vers l'extérieur, pour venir pratiquement en affleurement de l'échelon 20.

Le mode de réalisation illustré sur la figure 4 diffère de celui décrit ci-dessus par la forme du bord du bouton 1 tourné vers la façade 10, définissant la lèvre 6, et par la profondeur plus grande de la cuvette formée par la portion de paroi 11 de la façade.

La lèvre 6 est de nouveau orientée généralement axialement en direction de la portion de paroi 11, son épaisseur allant en diminuant, mais sa face radialement intérieure 7 et sa face radialement extérieure 8 présentent en section axiale, comme vu sur la figure 4, une convexité tournée vers l'extérieur. Au repos, le diamètre maximal de la lèvre et le diamètre de son extrémité 9 sont respectivement légèrement supérieur et inférieur au diamètre de l'échelon cylindrique 20 reliant le fond 18 de la cuvette à la face plane 19 de la façade. Lors de la mise en place du bouton 1, par un mouvement axial, l'extrémité 9 pénètre d'abord librement dans la cuvette, puis la face extérieure convexe 8 de la lèvre vient en appui sur l'échelon 20, provoquant une déformation élastique de la lèvre en direction de l'axe. En fin d'introduction, la lèvre 6 s'appuie sur la paroi cylindrique 20 de la cuvette par une région médiane de la longueur axiale de sa face extérieure 8, comme représenté.

La lèvre et la surface d'appui peuvent encore présenter d'autres configurations que celles illustrées. La surface d'appui peut en particulier être inclinée, par exemple tronconique.

Outre les fonctions de la jupe exposées plus haut, la réalisation du capuchon 32 en élastomère procure un contact agréable et sans glissement avec les doigts de l'utilisateur.

## Revendications

1. Bouton de manoeuvre (1) propre à tourner autour d'un axe (5), notamment pour un tableau de commande de chauffage de l'habitacle d'un véhicule, comprenant un corps rigide (2) et un capuchon (3) qui recouvre le corps radialement et d'un premier côté dans la direction axiale, et se termine par un bord annulaire (6) du second côté dans la direction axiale, **caractérisé en ce que** le capuchon est en élastomère et que le bord annulaire définit une lèvre annulaire (6) propre à s'appliquer selon une ligne ou une surface de contact annulaire continue, avec déformation élastique, sur une surface d'appui fixe (18, 20).

2. Bouton de manoeuvre selon la revendication 1, dans lequel ladite lèvre a une forme sensiblement de révolution autour dudit axe.

3. Bouton de manoeuvre selon l'une des revendications 1 et 2, dans lequel ladite surface d'appui (18) est sensiblement plane et perpendiculaire à l'axe, la surface d'appui et la lèvre étant tournées respectivement du premier côté et du second côté.

4. Bouton de manoeuvre selon la revendication 3, dans lequel la lèvre est inclinée par rapport à l'axe de telle sorte qu'elle tend à fléchir radialement vers l'extérieur ou vers l'intérieur sous la poussée exercée par ladite surface plane.

5. Bouton de manoeuvre selon l'une des revendications 1 et 2, dans lequel la surface d'appui (20) est sensiblement de révolution autour dudit axe.

6. Bouton de manoeuvre selon la revendication 5, dans lequel la lèvre présente, pour définir ladite ligne ou surface de contact annulaire, une portion de surface qui, en section axiale, est convexe et située dans une région médiane de la longueur de la section axiale de la lèvre.

7. Tableau de commande, notamment pour le chauffage de l'habitacle d'un véhicule, comprenant une façade (10) et au moins un bouton de manoeuvre (1) selon l'une des revendications précédentes, monté en regard de la façade, ladite lèvre annulaire (6) étant appliquée sur la façade selon une ligne ou une surface de contact annulaire continue, avec déformation élastique.

8. Tableau de commande selon la revendication 7, comprenant un bouton de manoeuvre selon la revendication 3 dont la longueur de la lèvre dans la direction axiale est réduite d'environ 0,3 mm par ladite déformation élastique.

9. Tableau de commande selon l'une des revendications 7 et 8, dans lequel la lèvre s'appuie sur la paroi (18, 20) d'un évidement ménagé dans la face avant de la façade.

## Patentansprüche

1. Einstellknopf (1) zum Drehen um eine Achse (5), insbesondere für eine Fahrgastraumheizungs-Steuertafel eines Fahrzeugs, enthaltend einen starren Körper (2) und eine Kappe (3), die den Körper radial und auf einer Seite in axialer Richtung abdeckt und in einem ringförmigen Rand (6) auf der zweiten Seite in radialer Richtung endet, **dadurch gekennzeichnet, dass** die Kappe aus einem Elastomer besteht und der ringförmige Rand eine ringförmige Lippe (6) ausbildet, die dazu geeignet ist, sich unter elastischer Verformung in einer durchgehenden, ringförmigen Kontaktlinie oder -fläche an eine feste Anlagefläche (18, 20) anzulegen.

2. Einstellknopf nach Anspruch 1, bei dem die genannte Lippe eine zur Achse im wesentlichen drehsymmetrische Gestalt hat.

3. Einstellknopf nach einem der Ansprüche 1 und 2, bei dem die Anlagefläche (18) im wesentlichen eben ist und senkrecht zur Achse verläuft, wobei die Anlagefläche sowie die Lippe zur ersten Seite bzw. zur zweiten Seite gewendet sind.

4. Einstellknopf nach Anspruch 3, bei dem die Lippe gegenüber der Achse derart geneigt ist, dass sie unter dem von der genannten ebenen Fläche ausgeübten Druck zu einer radialen Biegung nach aussen oder nach innen neigt.

5. Einstellknopf nach einem der Ansprüche 1 und 2, bei dem die Anlagefläche (20) im wesentlichen drehsymmetrisch um die Achse ist.

6. Einstellknopf nach Anspruch 5, bei dem die Lippe zur Bildung der ringförmigen Kontaktlinie oder -fläche einen Oberflächenabschnitt aufweist, der im Axialschnitt konvex ist und in einem mittleren Bereich der Längserstreckung des Axialschnitts der Lippe liegt.

7. Steuertafel, insbesondere für die Fahrgastraumheizung eines Fahrzeugs, enthaltend eine Vorderseite (10) und wenigstens einen Einstellknopf (1) nach einem der vorhergehenden Ansprüche, der der Vorderseite gegenüberstehend angebracht ist, wobei die ringförmige Lippe (6) an der Vorderseite in einer durchgehenden, ringförmigen Kontaktlinie oder -fläche unter elastischer Verformung anliegt.

8. Steuertafel nach Anspruch 7, enthaltend einen Einstellknopf nach Anspruch 3, bei dem die Länge der Lippe in axialer Richtung durch die elastische Verformung um etwa 0,3 mm vermindert ist.

9. Steuertafel nach einem der Ansprüche 7 und 8, bei der die Lippe an der Wand (18, 20) einer in der Vorderfläche der Vorderseite ausgebildeten Vertiefung anliegt.

## Claims

1. Control knob (1) capable of turning about an axis (5), in particular for a heating control panel of a vehicle passenger cell, comprising a rigid body (2) and a cap (3) which covers the body radially and on a first side in the axial direction and ends with an annular edge (6) on the second side in the axial direction, **characterised in that** the cap is composed of elastomer material and that the annular edge defines an annular lip (6) capable of being applied, along a line or a continuous annular contact face and with resilient deformation, to a fixed bearing face (18, 20).

2. Control knob according to claim 1, wherein the lip has a shape substantially generated by revolution about the axis.

3. Control knob according to one of claims 1 or 2, wherein the bearing face (18) is substantially plane and perpendicular to the axis, the bearing face and the lip being turned respectively to the first side and the second side.

4. Control knob according to claim 3, wherein the lip is inclined relative to the axis so that it tends to point radially outwards or inwards under the pressure exerted by the plane face.

5. Control knob according to one of claims 1 or 2, wherein the bearing face (20) is substantially generated by revolution about the axis.

6. Control knob according to claim 5, wherein the lip has a surface portion which, in order to define the said line or annular contact face, is convex in axial section and is located in a central region of the length of the axial section of the lip.

7. Control panel, in particular for the heating of a vehicle passenger cell, comprising a façade (10) and at least one control knob (1) according to one of the preceding claims, mounted opposite the façade, the annular lip (6) being applied to the façade along a line or continuous annular contact face with resilient deformation.

8. Control panel according to claim 7, comprising a control knob according to claim 3, whose length of lip in the axial direction is reduced by about 0.3 mm by the resilient deformation.

9. Control panel according to one of claims 7 or 8, wherein the lip bears on the wall (18, 20) of a recess formed in the front face of the façade.
